# EUROPEAN PATENT SPECIFICATION

(11) **EP 0 522 119 B1**
(45) Date of publication and mention of the grant of the patent: **04.10.1995**
(21) Application number: 92902974.2
(22) Date of filing: 24.01.1992
(51) Int. Cl.: H04N 9/64

(54) **NON-SHARP CUT FILTERS FOR ASSEMBLING AND SPLITTING SIGNALS IN WESTON CLEAN PAL**
FILTER MIT FLACHEN FLANKEN ZUM ZUSAMMENSETZEN UND TRENNEN VON WESTON-CLEAN-PAL-SIGNALEN
FILTRES SANS COUPURE NETTE POUR ASSEMBLER ET DIVISER LES SIGNAUX DANS UN SYSTEME PAL DU TYPE WESTON CLEAN

(30) Priority: 24.01.1991 GB 9101529; 05.03.1991 GB 9104559
(43) Date of publication of application: 13.01.1993
(73) Proprietor: BRITISH BROADCASTING CORPORATION, London W1A 1AA (GB)
(72) Inventor: DREWERY, John, Oliver 83 Egmont Road, Surrey SM2 5JS (GB); WELLS, Nicholas, Dominic, Brighton BN2 3AB (GB)
(74) Representative: Garratt, Peter Douglas
(86) International application number: PCT/GB92/00143
(87) International publication number: WO 92/13425

(56) References cited:
- GB-A- 2 113 037
- US-A- 4 288 810
- EBU REVIEW- TECHNICAL. no. 215, February 1986, BRUSSELS BE pages 3 - 18; J.O.DREWERY: 'A compatible improved PAL system'

## Description

### FIELD OF THE INVENTION

This invention relates to the Weston PAL video signal (W-PAL), and in particular to improvements in the assembler and splitter which respectively, assemble and split luminance Y and chrominance (U+V/U-V) components.

### BACKGROUND TO THE INVENTION

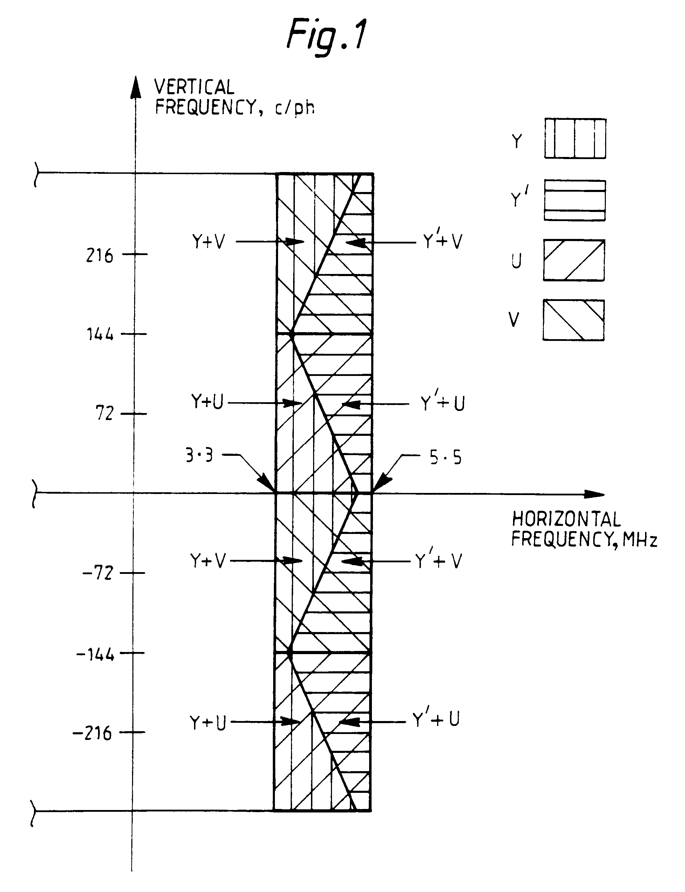

The Weston Clean PAL system is described in GB-A-2044577, GB-A-2113037, GB-A-1534268, GB-A-1534269 and GB-A-1534270 and in BBC Research Department Report No: 1980/1. The contents of these four documents are incorporated herein by reference. W-PAL obtains separation of luminance and chrominance by phase segregation, whereby the luminance is sampled at a frequency of twice the colour subcarrier frequency thereby causing it to appear as double sideband modulation of the colour subcarrier. At the same time the two chrominance components are formed into a single signal consisting of the quantities (U + V)/√2 and (U - V)/√2 on alternate lines which modulates the subcarrier directly. If PAL compatibility were not required the two modulation processes could be in quadrature so enabling the subcarrier to carry both luminance and chrominance without interaction in spite of their occupying the same spectral space. Fig. 1 shows the two-dimensional spectrum of the alternate-line chrominance and the sampled luminance, from which it can be seen that there is a considerable overlap of the luminance and chrominance spectra, amounting to the region 3.36 - 5.5 MHz in system I PAL. This region is the region in which aliasing will occur at 2 Fsc sampling (8.86 MHz - 5.5 MHz = 3.36 MHz) and varies with different PAL standards.

Compatibility with normal PAL, however, requires that the signals are further processed before combination. In particular, the combined chrominance signal must be phase shifted so that spectral components at 3/4 line offsets are in phase quadrature with components at 1/4 line offsets, restoring the phase quadrature between U and V. This must be done in such a way as to preserve the potential phase separation between chrominance and luminance. At the receiver, the UV phase separation is removed and the luminance and chrominance are separated by synchronous demodulation. These complex functions are provided by so-called assembler and splitter circuits which lie at the core of the Weston Clean PAL system. These circuits are described in GB-A-1534268, GB-A-1534269 and GB-A-1534270, and in GB-A-2044577 and GB-A-2113037.

### SUMMARY OF THE INVENTION

The present invention aims to provide an improved assembler and splitter through improved filter design.

We have appreciated that cross colour effects may be eliminated without affecting the luminance bandwidth and independently of the link filter in the PAL transmission channel. This may be achieved by ensuring that filters in the W-PAL assembler and splitter have the correct interrelationship.

We have appreciated that the filter in the luminance channel of the splitter must have an amplitude which is a shifted mirror of the filter in the chrominance path of the assembler. Moreover, the filter in the chrominance path of the splitter must have an amplitude which is a shifted mirror of the amplitude of the filter in the luminance path of the assembler. Furthermore, the product of the filters in the luminance paths in the assembler and splitter must be a Nyquist filter. Similarly, the product of the filters in the chrominance path of the assembler and splitter must also be a Nyquist filter.

The phase of the luminance and chrominance filters in the splitter may be the anti-mirror of the phase of the chrominance and luminance filters respectively in the assembler.

Preferably, the filter in the luminance channel of the assembler extinguishes below the frequency of the link filter in the PAL channel. This means that variations in link bandwidth affect the horizontal chrominance bandwidth only and not the ability to eliminate cross colour effects or the luminance bandwidth.

The invention is set out in the independent claims to which reference should be made.

Various modifications, further improvements and preferred features are set out in the dependent claims.

### DESCRIPTION OF DRAWINGS

An embodiment of the invention will now be described with reference to the drawings in which:
Figure 1 shows the two dimensional spectrum of sampled luminance and line alternating chrominance modulated on the subcarrier and showing spectral overlap;
Figure 2 shows, in block form, the components of a conventional Weston Clean PAL assembler and splitter;
Figure 3 shows the generic circuit form of the circuit of Figure 2;
Figure 4 a) and b) shows the amplitude,s of the frequency characteristics of the functions F₁ and F₂ of Figure 3 in the known system shown in Figure 2;
Figure 5 a) and b) show examples of the amplitudes of the frequency characteristics of the functions F₁ and F₂ respectively of Figure 3 embodying the invention;
Figure 6 a) and b) show examples of the amplitudes of the frequency characteristics of the functions F₁ and F₂ respectively of Figure 3 also second embodying the invention.
Figure 7 a) to d) show circuit realisations of the proposed transfer functions for F₁, F₂, F₃ and F₄ in Figure 3, embodying the invention; and
Figure 8 a) and b) shows improvements to Figure 7 in which functions F₁ and F₂ and F₃ and F₄ are continued to reduce the number of components required.

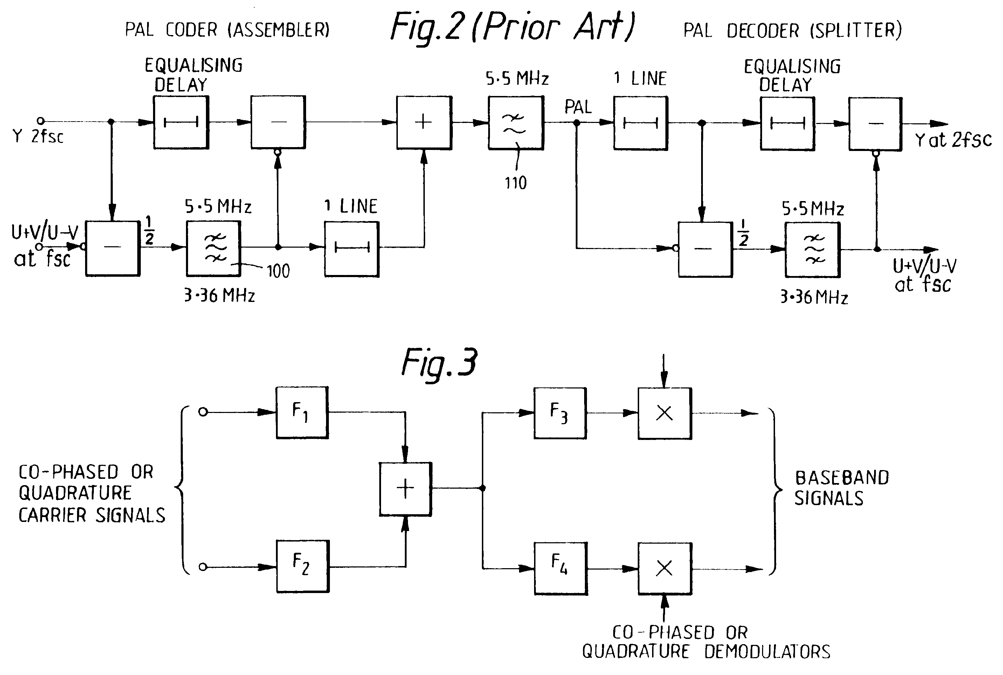

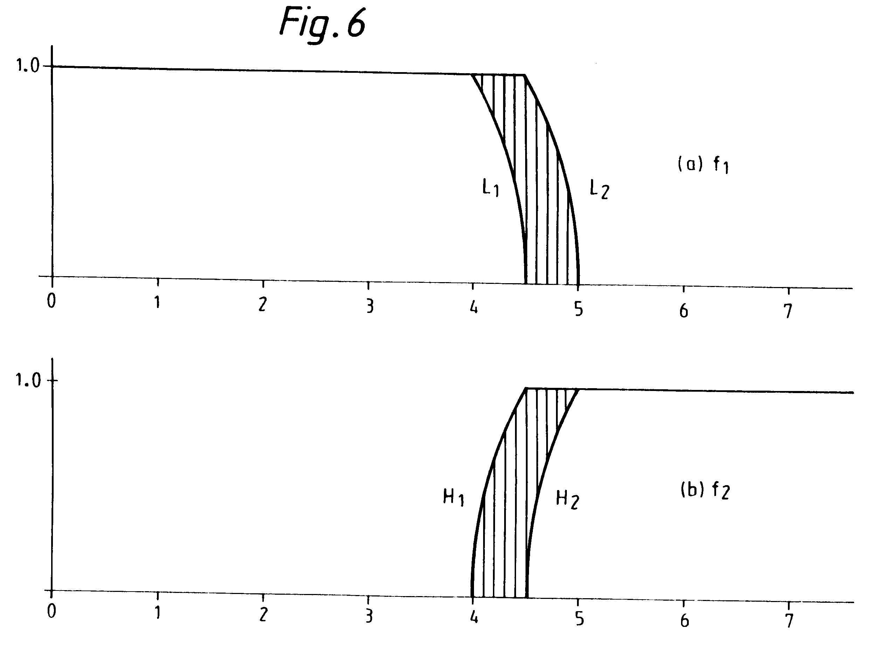

The assembler and splitter used by the original Weston Clean PAL system are shown for convenience in Fig. 2. This circuit accepts luminance sampled at twice the subcarrier frequency and combined chrominance modulated on the subcarrier, in phase with the sampling. Synchronous sampling of the luminance output and cophased demodulation of the chrominance output yield signals without cross-effects. As can be seen, both sending and receiving networks are characterised by a single band-pass filter 100 which defines the region of luminance/chrominance spectral overlap together with a line delay which helps to form a comb filter in this region. The low-pass filter 110 is needed to ensure correct luminance performance and is assumed to occur on the link between sender and receiver. The transfer functions for the luminance to PAL and PAL to luminance paths are not identical since, at the sender, the low frequencies are undelayed whereas, at the receiver, they are delayed by one line. This equalises the delay in the overlap region which is half a line at both ends. For a fuller description of the assembler and splitter reference should be made to Figure 6 of GB-A-1534268, GB-A-1534269 and GB-A-1534270, and to GB-A-2044577 and GB-A-2113037.

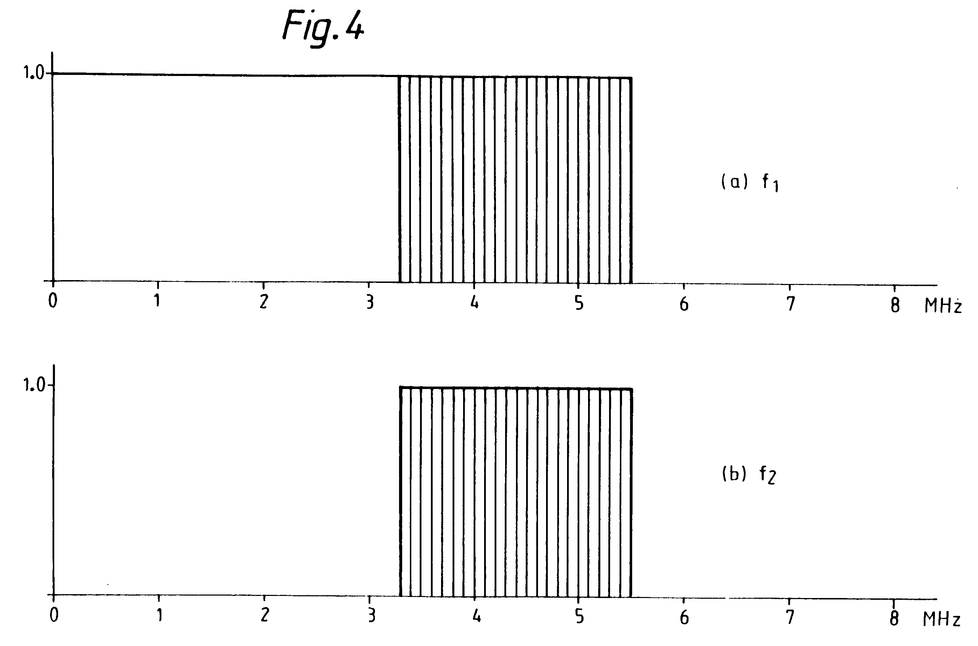

The generic form of the assembler and splitter is shown in Fig. 3 which defines filter functions F₁, F₂, F₃ and F₄. In the above case the input and output carriers are cophased, as previously mentioned. The filter functions for Fig. 2 then become$\text{F₁ = L [1 + B(z⁻¹ - 1)/2]}$$\text{F₂ = LB(1 - z⁻¹)/2}$$\text{F₃ = z⁻¹ + B(1 - z⁻¹)/2}$$\text{F₄ = B(z⁻¹ - 1)/2}$
where z⁻¹ is the transfer function of a line delay, i.e.$\text{z⁻¹ = exp(-jϑ)}$
where${\text{ϑ = 2πfT}}_{\text{L}}$
and L and B are the transfer functions of the low- and band-pass filters respectively. The amplitudes of the frequency characteristics of F₁ and F₂, remembering that they are complex, are shown in Fig. 4. That of F₄ is identical to that of F₂ whilst that of F₃ is similar to that of F₁ without the upper band limit.

The use of a band-pass filter in combination with a low-pass filter is bad practice since two filters define the upper edge of the signal. This is an historical hangover from the original hardware implementation of the system in which the band-pass filter worked at a sampling frequency of 2f_{sc} as described in GB-A- 1534268 and BBC Research Department Report No: 1976/24. The theory of the original system assumed that the filters were of infinitely sharp cut so that this did not matter. The objection can be answered by replacing the band-pass filter with a high-pass filter.

Perfect phase segregation, however, still appears to require filters with an infinitely sharp cut. Practical filters have a finite rate of cut and so the phase segregation will potentially fail at the edges of the overlap band in the transition regions of the low- and high-pass filters. This undermines the case for phase segregation since it is based on the proposition that luminance-chrominance separation does not depend on sharp cut filters as it does with band-segregation. (In mitigation, the failure is with horizontal filters which can be made sharper than vertical or temporal filters). It is therefore of crucial importance to discover if this requirement for sharp cut filters is fundamental. Experience with filtering for sub-Nyquist PAL, sampled at 2f_{sc}, suggests that this may not be so.

It has been shown that the general requirements on the filters F₁, F₂, F₃ and F₄, if the carriers are cophased, are given by${\text{F₁F₃ = N}}_{\text{Y}}$${\text{F₂F₄ = N}}_{\text{C}}$${\text{F₁F₄ = jS}}_{\text{YC}}$${\text{F₂F₃ = jS}}_{\text{CY}}$
where N is any skew-symmetric function and S is any symmetric function about the carrier frequency, that is,${\text{N(f) = 1 - N*(2f}}_{\text{sc}} \text{- f)}$
and${\text{S(f) = S*(2f}}_{\text{sc}} \text{- f)}$
remembering that N and S can be complex. This condition for N makes it a so-called Nyquist filter. If these conditions are obeyed then the pure imaginary cross transfer functions put the unwanted signals in quadrature with the demodulating sinewaves in both cases whilst the transfer functions for the wanted signals are flat through the complementary sideband principle.

Now, considering the transfer functions of the original systems with perfect filters, the wanted and cross characteristics within the combing region, where B and L are unity, are given by${\text{F}}_{\text{Y}} \text{= F₁F₃ = ¼(1 + 2z⁻¹ + z⁻²)} \text{= ½z⁻¹(1 + cos ϑ)}$${\text{F}}_{\text{C}} \text{= F₂F₄ = ¼(-1 + 2z⁻¹ - z⁻²)} \text{= ½z⁻¹(1 - cos ϑ)}$${\text{F}}_{\text{YC}} \text{= F₁F₄ = ¼(z⁻² - 1)} \text{= -½z⁻¹jsin ϑ}$${\text{F}}_{\text{CY}} \text{= F₂F₃ = ¼(1 - z⁻²)} \text{= ½z⁻¹jsin ϑ}$
As ϑ has the value 3π/2 at fsc it is clear that, within the combing region, the transfer functions of the wanted signals are skew-symmetric whilst those of the cross signals are symmetric. Thus we may write${\text{F}}_{\text{Y}} \text{= z⁻¹N₁}$${\text{F}}_{\text{C}} \text{= z⁻¹N₁}$${\text{F}}_{\text{YC}} \text{= -z⁻¹js}$${\text{F}}_{\text{CY}} \text{= z⁻¹jS}$
where$\text{N₁ = ½(1 + cos ϑ)}$$\text{N₂= ½(1 - cos ϑ)}$$\text{S = ½sin ϑ}$
As the combing region is symmetrical about fsc it follows that F_{Y} is still skew-symmetric outside it since F_{Y} rises to unity below it and drops to zero beyond it. However, at the edges of the combing region, it is still possible for its skew symmetry to hold if the shapes of the upper and lower edges obey the condition since the contents of the envelope already obey the condition. However, it is clear that this situation does not apply to F_{C} since F₂ and F₄ are zero on both sides of the combing region and therefore also F_{YC} and F_{CY}. But it does suggest that a solution might be possible if F₂ and F₄ are allowed to remain at unity at one end of the combing region with conditions on the upper and lower edges.

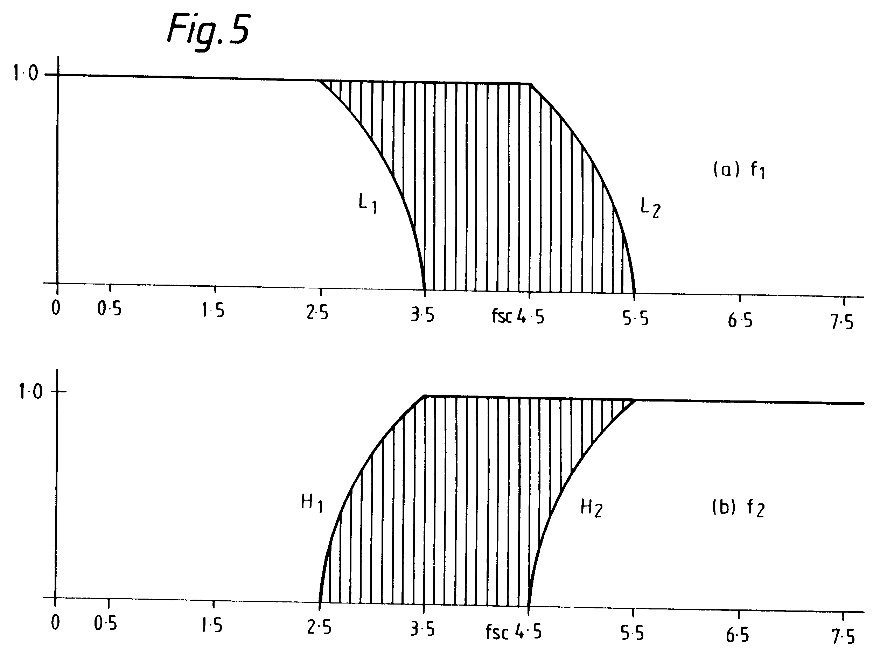

Consider amplitude transfer functions for F₁ and F₂ as shown in Fig. 5 with those for F₃ and F₄ being identical. F₁ is now characterised by two low-pass filters, L₁ and L₂, which define the lower and upper edges of the combing region whilst F₂ is characterised by two high-pass filters, H₁ and H₂, which do the same for the chrominance. Note that F₂ continues at unity indefinitely as the frequency rises.

Taking into account the need for equalising the delay between low and high frequencies, let the transfer functions be$\text{F₁ = L₁ + (L₂ - L₁)(1 + z⁻¹)/2}$$\text{F₂ = H₂z⁻¹ + (H₁ - H₂)(z⁻¹ - 1)/2}$$\text{F₃ = L₁z⁻¹ + (L₂ - L₁)(1 + z⁻¹)/2}$$\text{F₄ = H₂ + (H₁ - H₂)(1 - z⁻¹)/2}$
Then, after some algebraic manipulation, the wanted and cross transfer functions are given by${\text{F}}_{\text{Y}} \text{= z⁻¹[L₂²N₁ + L₁²N₂]}$${\text{F}}_{\text{C}} \text{= z⁻¹[H₂²N₁ + H₁²N₂]}$${\text{F}}_{\text{YC}} \text{= z⁻¹[L₂H₂N₁ - L₁H₁N₂ + j(L₁H₂ + L₂H₁)S]}$${\text{F}}_{\text{CY}} \text{= z⁻¹[L₂H₂N₁ - L₁H₁N₂ - j(L₁H₂ + L₂H₁)S]}$
where N₁, N₂ and S are the transfer functions of the "ideal" system in the combing region, as defined above.

Where the filters L₁, L₂, H₁ and H₂ are sharp cut, these equations reduce to those above except that F_{YC} and F_{CY} are reversed in sign. Thus, in F_{Y} at low frequencies, where both L₁ and L₂ are unity, the function N₁ + N₂ is also unity and similarly for F_{C} at high frequencies. In F_{YC} and F_{CY}, the functions L₁H₁ and L₂H₂ are zero since they are products of coincident infinitely sharp rising and falling edges. Meanwhile, the function L₁H₂ + L₂H₁ corresponds to a bandpass filter because the first term is zero as L₁ and H₂ do not overlap.

In a practical situation where the filters are not sharp cut we can impose the requirements for skew symmetry to yield conditions on the filters. For F_{Y} we have, substituting for N₁, N₂ and S:${\text{L₂²(f)+L₁²(f)+[L₂²(f)-L₁²(f)]cos ϑ + L₂²(2f}}_{\text{sc}} {\text{-f) + L₁²(2f}}_{\text{sc}} \text{- f)} {\text{+ [L₂²(2f}}_{\text{sc}} {\text{- f) - L₁²(2f}}_{\text{sc}} {\text{- f)]cos (2ϑ}}_{\text{sc}} \text{- ϑ) = 2}$
where${\text{ϑ}}_{\text{sc}} {\text{= 2πf}}_{\text{sc}} {\text{T}}_{\text{L}} \text{= 3π/2}$
Substituting for ϑ_{sc} and equating powers of cos ϑ we have${\text{L₂²(f) + L₁²(f) + L₂²(2f}}_{\text{sc}} {\text{- f) + L₁²(2f}}_{\text{sc}} \text{- f) = 2}$
and${\text{L₂²(f) - L₁²(f) - L₂²(2f}}_{\text{sc}} {\text{- f) + L₁²(2f}}_{\text{sc}} \text{- f) = 0}$
which leads to${\text{L₂²(f) + L₁²(2f}}_{\text{sc}} \text{- f) = 1}$
which means that L₁² is the complement of the characteristic of L₂² reflected about the frequency f_{sc}.

In the same way, for F_{C} we have${\text{H₂²(f)+H₁²(f)+[H₂²(f)-H₁²(f)]cos ϑ + H₂²(2f}}_{\text{sc}} {\text{-f)+H₁²(2f}}_{\text{sc}} \text{-f)} {\text{+ [H₂²(2f}}_{\text{sc}} {\text{- f) - H₁²(2f}}_{\text{sc}} {\text{- f)]cos (2ϑ}}_{\text{sc}} \text{- ϑ) = 2}$
Substituting for ϑ_{sc} and equating powers of cos ϑ we have${\text{H₂²(f) + H₁²(f) + H₂²(2f}}_{\text{sc}} {\text{- f) + H₁²(2f}}_{\text{sc}} \text{- f) = 2}$
and${\text{H₂²(f) - H₁²(f) - H₂²(2f}}_{\text{sc}} {\text{- f) + H₁²(2f}}_{\text{sc}} \text{- f) = 0}$
which leads to${\text{H₂²(f) + H₁²(2f}}_{\text{sc}} \text{- f) = 1}$
which means that H₁² is the complement of the characteristic of H₂² reflected about the frequency f_{sc}.

Turning to F_{YC} and F_{CY} however, it is clear that the original conditions cannot be satisfied because, in addition to the pure imaginary term, there is also a real term which is non-zero when the filters are not sharp cut. All is not lost, however, since it is possible to have${\text{F}}_{\text{YC}} \text{= z⁻¹[A + jS₁]}$
where A is truly antisymmetrical about the subcarrier frequency, i.e.${\text{A(f) = -A*(2f}}_{\text{sc}} \text{- f)}$
since, upon demodulation, each frequency component of the upper sideband is cancelled by the corresponding lower sideband component of a signal undergoing the transfer function A.

Imposing the antisymmetry condition on the real part:$\text{L₂(f)H₂(f) - L₁(f)H₁(f) + [L₂(f)H₂(f) + L₁(f)H₁(f)]cos ϑ} {\text{+ L₂(2f}}_{\text{sc}} {\text{- f)H₂(2f}}_{\text{sc}} {\text{- f) - L₁(2f}}_{\text{sc}} {\text{- f)H₁(2f}}_{\text{sc}} \text{- f)} {\text{+[L₂(2f}}_{\text{sc}} {\text{- f)H₂(2f}}_{\text{sc}} \text{- f)} {\text{+ L₁(2f}}_{\text{sc}} {\text{- f)H₁(2f}}_{\text{sc}} {\text{-f)]cos(2ϑ}}_{\text{sc}} \text{- ϑ) = 0}$
Substituting for ϑ_{sc} and equating powers of cos ϑ we have$\text{L₂(f)H₂(f) - L₁(f)H₁(f)} {\text{+ L₂(2f}}_{\text{sc}} {\text{- f)H₂(2f}}_{\text{sc}} {\text{- f ) - L₁(2f}}_{\text{sc}} {\text{- f)H₁(2f}}_{\text{sc}} \text{- f) = 0}$
and$\text{L₂(f)H₂(f) + L₁(f)H₁(f)} {\text{- L₂(2f}}_{\text{sc}} {\text{- f)H₂(2f}}_{\text{sc}} {\text{- f) - L₁(2f}}_{\text{sc}} {\text{- f)H₁(2f}}_{\text{sc}} \text{- f) = 0}$
which leads to${\text{L₂(f)H₂(f) - L₁(2f}}_{\text{sc}} {\text{- f)H₁(2f}}_{\text{sc}} \text{- f) = 0}$
Substituting for L₁ and H₁ in terms of L₂ and H₂, as derived above, gives$\text{L₂(f)H₂(f) = √[1 - L₂²(f)]√[1 - H₂²(f)]}$
which, after some algebraic manipulation, gives$\text{L₂²(f) + H₂² (f) = 1}$
and hence$\text{L₁²(f) + H₁²(f) = 1}$
or${\text{L₁(2f}}_{\text{sc}} \text{- f) = H₂(f)}$
and${\text{L₂(2f}}_{\text{sc}} \text{- f) = H₁(f)}$
showing that H₂ is the reflection of L₁ about f_{sc} whilst H₁ is the reflection of L₂ about f_{sc} and also that H₁ is square root complementary to L₁ whilst H₂ is square root complementary to L₂. This latter means that H₁ and H₂ cannot be obtained from L₁ and L₂ by simple subtraction.

Imposing the symmetry condition on the pure imaginary part:$\text{[L₁(f)H₂(f) + L₂(f)H₁(f)]sin ϑ =} {\text{[L₁(2f}}_{\text{sc}} {\text{-f)H₂(2f}}_{\text{sc}} {\text{-f) + L₂(2f}}_{\text{sc}} {\text{- f)H₁(2f}}_{\text{sc}} {\text{- f)]sin (2ϑ}}_{\text{sc}} \text{- ϑ)}$
Substituting for ϑ_{sc} we have${\text{sin (2ϑ}}_{\text{sc}} \text{- ϑ) = sin ϑ}$
and$\text{L₁(f)H₂(f) + L₂(f)H₁(f) =} {\text{L₁(2f}}_{\text{sc}} {\text{- f)H₂(2f}}_{\text{sc}} {\text{- f) + L₂(2f}}_{\text{sc}} {\text{- f)H₁(2f}}_{\text{sc}} \text{- f)}$
Again, this can be satisfied by${\text{L₂(2f}}_{\text{sc}} \text{- f) = H₁(f)}$
and${\text{L₁(2f}}_{\text{sc}} \text{- f) = H₂(f)}$
showing that the above result is consistent.

The relationship derived between L₂ and H₁ and between L₁ and H₂ means that F₄ is, in fact, the shifted version of F₁ and F₃ is the shifted version of F₂ (actually the negative), that is${\text{F₄(f) = F₁(f - 2f}}_{\text{sc}} \text{)} {\text{= F₁*(2f}}_{\text{sc}} \text{- f)}$
and${\text{F₃(f) = -F₂(f - 2f}}_{\text{sc}} \text{)} {\text{= -F₂*(2f}}_{\text{sc}} \text{- f)}$
since${\text{z⁻¹(f - 2f}}_{\text{sc}} \text{) = -z⁻¹(f)}$
It is these facts which help to give F₁F₄ and F₂F₃ the special properties. Note that this would not be so if F₂ and F₄ were interchanged. But they could be if F₁ and F₃ were also interchanged.

The derived relationships show that once one of the filters L₁, L₂, H₁ and H₂ is specified it sets the others. Phase segregation imposes no restriction on the form of the specified filter but the form does govern the nature of the compatibility of the assembled PAL signal with conventional PAL. If we choose to specify L₂ then this means that phase segregation would allow its transition band to lie, for example, anywhere in the original combing region between 3.3 MHz and 5.5 MHz but compatibility would require it to start at or beyond f_{sc} so that the PAL signal is compatible in uniform-coloured areas. For example, Fig. 5 shows a characteristic which starts at f_{sc} and stops at 5.5 MHz and is the square root of a linear decrease whilst Fig. 6 shows a sharper characteristic which starts at f_{sc} and stops at 5 MHz. In such a case the signal beyond the combing region is the line-alternating U + V, U - V chrominance signal modulated on the subcarrier.

One consequence of this is that it can be arranged that the characteristic of L₂ is extinguished at a frequency which is below the cut frequency of any filter which exists on the PAL link such as might be expected in, for example, a transmitter. Then the properties F_{y}, F_{YC} and F_{CY} are not dependent on such an external filter which only affects the property F_{C}. In other words, band limiting the PAL signal affects only the chrominance bandwidth and not the luminance bandwidth or the phase segregation. This is extremely important, especially in the context of differing PAL systems. For example, the characteristics of Fig. 6 will be compatible with both systems I and B/G.

To obtain circuit realisations of the transfer functions F₁, F₂, F₃ and F₄ which are balanced the equations may be rearranged as$\text{F₁ = (L₂ + L₁)/2 + (L₂ - L₁) z⁻¹/2}$$\text{F₂ = -(H₁ - H₂)/2 + (H₁ + H₂) z⁻¹/2}$$\text{F₃ = (L₂ - L₁)/2 + (L₂ + L₁) z⁻¹/2}$$\text{F₄ = (H₁ + H₂)/2 - (H₁ - H₂) z⁻¹/2}$

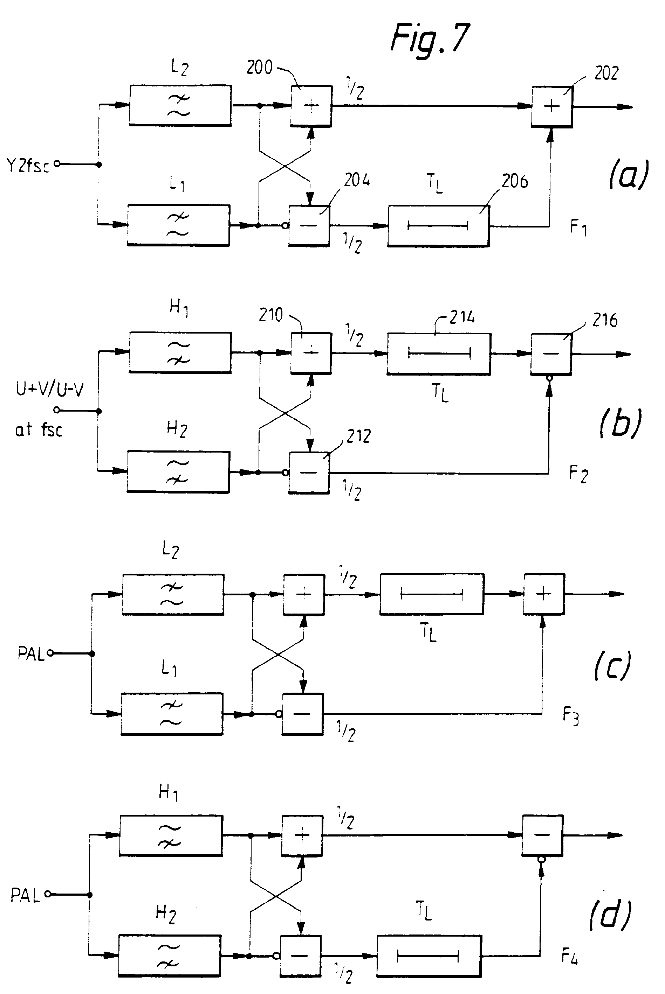

Fig. 7 a) to d) shows the circuits of these realisations.

In Figure 7 a) the input 2 Fsc luminance component is filtered in parallel low pass filters L₁, L₂. The output from each filter is summed by half adder 200 whose output (L₁, + L₂)/2 forms an input to adder 202. A half subtractor 204 has an input from filter L₂ and an inverted input from filter L₁ giving an output (L₂ L₁)/2. This output is delayed by one video line by line delay 206 as required by the Weston PAL system (see Figure 2) and forms the second input to adder 202. The output from adder 202 forms one input to the adder shown in the generic circuit diagram of Figure 3. The other input is provided by the circuit of Figure 7 b) which operates on the Fsc U+V/U-V chrominance signal. The circuit is similar to that of Figure 7 a) but the low pass filters are replaced by high pass filters H₁, H₂ and the output from the half adder 210, rather than the half subtractor 212, is delayed by video line delay 214. Subtractor 216 provides the second input to the adder of the generic circuit.

Figure 7 c) operates on the PAL luminance component and its frequency characteristic is a shifted version of the filter of Figure 7 b). Figure 7 d) has a frequency characteristic which is a shifted version of Figure 7 a). The relationship between these filters was discussed earlier.

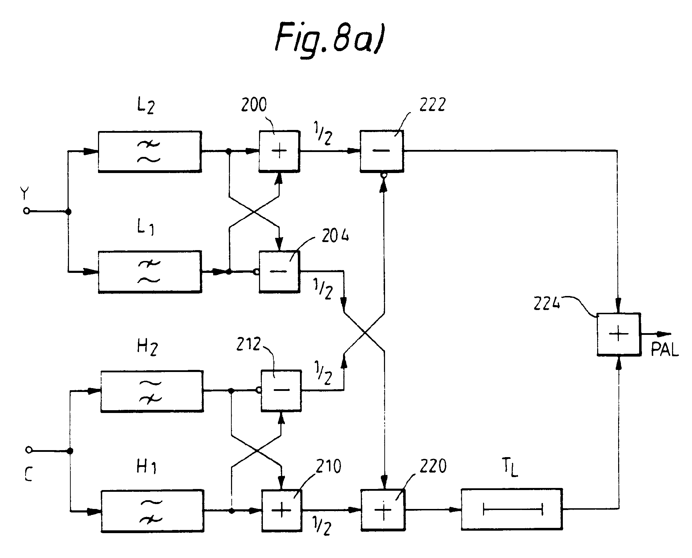

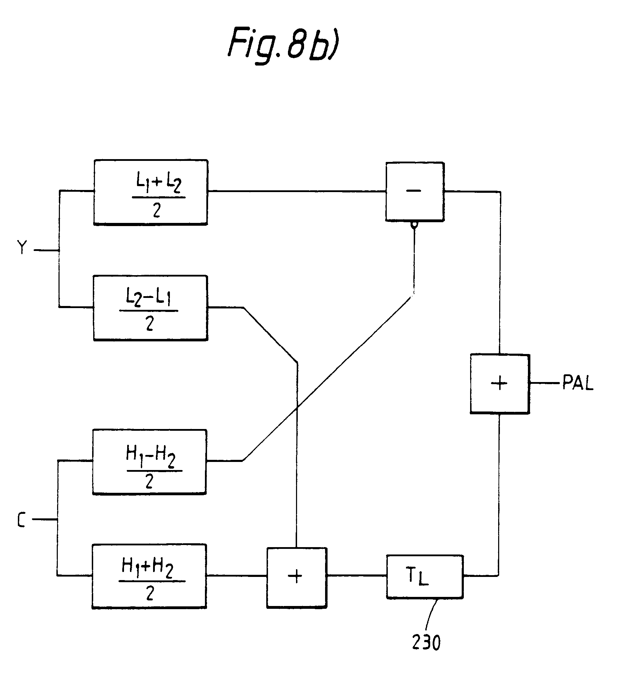

Figure 8 a) shows how Figures 7 a) and 7 b) may be combined to eliminate a video line delay. In this figure the low and high pass filters and half adders correspond to the similarly positioned components in Figures 7 a) and b). Adder 220 sums the output of half subtractor 204 in the low pass section and half adder 210 in the high pass section and provides the input to line delay 222. Subtractor 224 subtracts the output of half subtractor 212 of the high pass section from the output of half adder 200 in the low pass section. The final adder 226 corresponds to the adder in the Figure 3 generic circuit and has a W-PAL output.

Figure 8 b) shows a further simplification of Figure 8a which reduces the number of adders and subtractors requires and uses a single line delay 230. The filters L1, L2, H1, H2 are replaced by filters$\frac{\text{L2 + L1}}{\text{2}} \text{,} \frac{\text{L2 - L1}}{\text{2}} \text{,} \frac{\text{H1 - H2}}{\text{2}} \text{and} \frac{\text{H1 + H2}}{\text{2}} \text{.}$

The description has been given in the context of system I PAL which has a bandwidth of 5.5 Mhz. The assembler and splitter are equally applicable to PAL standards such as system B, G PAL with suitable variations in filter cut frequencies.

The description has described all components in terms of hardware. Many may be implemented in software.

## Claims

1. A system for transmitting and receiving a Weston Clean PAL (W-PAL) video signal in which the luminance signal Y is sampled at twice the colour sub-carrier frequency 2f_{sc} and the chrominance components U, V are sampled at sub-carrier frequency and carried as sum (U+V) and difference (U-V) signals on alternate video lines, comprising, at a transmitter:
an assembler for assembling co-phased or quadrature 2fsc luminance signals and fsc chrominance signals, and having:
a first filter means (F1) for filtering the luminance signal; and
a second filter means (F2) for filtering the chrominance signal;
and at a receiver
a third filter means (F3) for filtering the received luminance signal; and
a fourth filter means (F4) for filtering the received chrominance signal;
wherein:
the fourth filter means (F4) is a shifted mirror of the first filter means (F1), the third filter means (F3) is a shifted mirror of the second filter means (F2) and the product F1 F3 of the first and third filter means and the product F2 F4 of the second and fourth filter means are Nyquist filters Ny, Nc.

2. A system according to Claim 1, wherein the phase of the fourth filter means is the anti-mirror of the phase of the first filter means.

3. A system according to Claim 1 or 2, wherein the phase of the third filter means is the anti-mirror of the phase of the second filter means.

4. An assembler for a system for transmitting and receiving a Weston Clean PAL (W-PAL) video signal according to claim 1, comprising:
first filter means for filtering the luminance signal sampled at twice the subcarrier frequency;
second filter means for filtering the sum and difference chrominance signal sampled at subcarrier frequency; and
means for adding the filtered luminance and chrominance signals for transmission in a PAL channel having a low pass link filter;
the first and second filter means being chosen in conjunction with the third and fourth filter means in the splitter such that
the amplitudes of the fourth and third filter means are shifted mirrors of the amplitudes of the first and second filter means respectively, and the product of the first and third filter means and the second and fourth filter means are Nyquist filters Ny, Nc.

5. A splitter for a system for transmitting and receiving a Weston Clean PAL (W-PAL) video signal according to claim 1, comprising
third filter means for filtering a received W-PAL video signal to form a luminance signal for display or recording;
fourth filter means for filtering a received W-PAL video signal to form a chrominance signal for display or recording; and
means for demodulating the received signal;
wherein the luminance and chrominance components are filtered prior to transmission by the first and second filter means in the assembler respectively and
the amplitude of the fourth and third filter means are shifted mirrors of the first and second filter means respectively, and
the product of the first and third filter means and of the second and fourth filter means are Nyquist filters Ny, Nc.

6. A splitter according to Claim 5, wherein the phase of the fourth and third filter means is the anti-mirror of the phase of the first and second filter means respectively.

7. Apparatus for generating a Weston Clean PAL (W-PAL) video signal for transmission in which the luminance signal Y is sampled at twice the colour sub-carrier frequency 2fsc and the chrominance components U, V are sampled at subcarrier frequency fsc and carried as sum (U+V) and difference (U-V) signals on alternate video lines, comprising:
an assembler for assembling co-phased or quadrature 2fsc luminance signals and fsc chrominance signals to form a PAL signal for transmission and having:
first filter means for filtering the luminance signal;
second filter means for filtering the chrominance signal; and
means for adding the filtered luminance and chrominance signals to form a PAL video signal; wherein
the first filter means has a transfer function F₁ = (L₂ + L₁)/2 + (L₂ - L₁) z⁻¹/2 and the second filter means has a transfer function F₂ = -(H₁ - H₂)/2 + (H₁ + H₂) z⁻¹/2
Where L₁, L₂ are transfer functions of first and second low pass filters and H₁, H₂ are transfer functions of first and second high pass filters; z⁻¹ is the transfer function of a video line delay and wherein$\text{H₁(f) = L₂(2fsc - f)}$ and$\text{H₂ (f) = L₁ (2fsc - f)}$

8. An assembler for a Weston Clean PAL (W-PAL) video signal comprising:
first filter means for filtering the luminance signal sampled at twice the subcarrier frequency 2f_{sc};
second filter means for filtering the sum (U+V) and difference (U-V) chrominance signals sampled at subcarrier frequency f_{sc}; and
means for adding the filtered luminance and chrominance signals for transmission in a PAL channel; wherein the first filter means (F₁) has a transfer function F₁ = (L₂ + L₁)/2 + (L₂ - L₁) z⁻¹/2 and the second filter means has a transfer function$\text{F₂ = -(H₁ - H₂)/2 + (H₁ + H₂) z⁻¹/2}$ where L₁, L₂ are transfer functions of first and second low pass filters; H₁, H₂ are transfer functions of first and second high pass filters, z⁻¹ is the transfer function of a video line delay and wherein$\text{H₁ (f) = L₂ (2fsc - f)}$ and$\text{H₂ (f) = L₁ (2fsc - f)}$

9. Apparatus according to Claim 7 or 8, wherein the first filter means comprises first and second low pass filters arranged to filter the 2fsc luminance signal, a half adder for forming an output signal equal to half the sum of the output of the first and second low pass filters, a half subtractor for forming an output signal equal to half the difference between the second and first filter outputs, a line delay for operating on the output of the half subtractor to delay it by one video line, and a second adder for adding the outputs of the half adder and the line delay to form the luminance input to the said adding means of the assembler.

10. Apparatus according to Claim 3, wherein the second filter means comprises first and second high pass filters arranged to filter the fsc chrominance signal, a half adder for forming an output equal to half the sum of the input signals filtered by the first and second pass filters, a half subtractor for forming an output signal equal to half the difference between the outputs of the first and second high pass filters, a line delay for delaying the output of half adder by one video line and a subtractor for subtracting the output from the half subtractor from the output from the line delay.

11. Apparatus according to Claim 7 or 8, wherein the first and second filter means are combined and comprise a low pass filter section having first and second low pass filters, each arranged to filter the 2fsc luminance signal, a half adder and a half subtractor forming, respectively, output signals equal to half the sum and half the difference of the outputs of the second and first low pass filters;
a high pass filter section having first and second high pass filters, each arranged to filter the fsc chrominance signal, a half adder and a half subtractor forming, respectively, output signals equal to half the sum and half the difference of the outputs first and second high pass filters;
a subtractor means for subtracting the output of the half subtractor of the high pass filter section from the output of the half adder of the low pass filter section to form a first input to the adding means of the assembler, a further adder for adding the outputs of the half subtractor of the low pass filter section and the half adder of the high pass filter section, and a line delay for delaying the output of the further adder by one video line to form the second input to the adding means of the assembler.

12. Apparatus according to Claim 9, wherein the second low pass filter has a cut frequency starting at fsc for luminance signal amplitude equals unity and stopping at 5.5 MHz for luminance signal amplitude equals zero, and the first low pass filter has cut frequency starting at 2.4 MHz for luminance signal amplitude equals unity and stopping at 3.5 MHz for amplitude equals zero.

13. Apparatus according to Claim 9, wherein the second low pass filter has a cut frequency starting at fsc for luminance signal amplitude equal to unity and stopping at 5 MHz for luminance signal amplitude equal to zero, and the first low pass filter has a cut frequency starting at 4 MHz for amplitude equal to unity and stopping at 4.6 MHz for amplitude equals zero.

14. Apparatus for receiving a Weston Clean PAL (W-PAL) video signal for storage or display, said signal being and generated by an apparatus according to Claim 7, the apparatus for receiving comprising a splitter for splitting the received W-PAL signal to form baseband luminance chrominance signals, the splitter comprising;
third filter means for filtering the received luminance component;
fourth filter means for filtering the received chrominance component; and
co-phased or quadrature demodulating means for demodulating the outputs of the third and fourth filter means to produce baseband luminance and chrominance signals; wherein
the third filter means has a transfer function$\text{F₃ = (L₂ - L₁)/2 + (L₂ + L₁) z⁻¹/2}$ the fourth filter means has a transfer function$\text{F₄ = (H₁ + H₂)/2 - (H₁ - H₂) z⁻¹/2}$ where L₁, L₂, H₁, H₂ are transfer functions of first and second low pass filters and first and second high pass filters respectively and z⁻¹ is the transfer function of a video line delay, and wherein${\text{F₃ (f) = -F₂* (2f}}_{\text{sc}} \text{- f)}$ and${\text{F₄ (f) = F₁* (2f}}_{\text{sc}} \text{- f)}$ where F₁, F₂, H₁, H₂, L₁, L₂ and z⁻¹ are as defined in Claim 7.

15. A splitter for a Weston Clean PAL video signal (W-PAL) comprising:
third filter means for filtering the luminance component of a W-PAL signal;
fourth filter means for filtering the chrominance component of the W-PAL signal; and
co-phased or quadrature demodulating means for forming baseband luminance and chrominance signals;
wherein
the third filter means has a transfer function$\text{F₃ = (L₂ - L₁)/2 + (L₂ + L₁) z⁻¹/2}$ and the fourth filter means has a transfer function$\text{F₄ = (H₁ + H₂)/2 - (H₁ - H₂) z⁻¹/2}$ and${\text{F₃ (f) = - F₂* (2f}}_{\text{sc}} \text{- f)}$ and${\text{F₄ (f) = F₁* (2f}}_{\text{sc}} \text{- f)}$ where F₁, F₂, H₁, H₂, L₁, L₂ and z⁻¹ are as defined in Claim 8.

16. Apparatus according to Claim 14 or 15, wherein the third filter means comprises first and second low pass filters for filtering the received W-PAL luminance signal, a half adder having an output equal to half the sum of the outputs of the first and second low pass filters, a line delay for delaying the output of the half adder by one video line, a half subtractor for producing an output equal to half the difference between the second and first low pass filters, and an adder for summing the outputs of the line delay and the half subtractor.

17. Apparatus according to Claim 14 or 15, wherein the fourth filter means comprises first and second high pass filter for filtering the received W-PAL chrominance signal, a half adder having an output equal to half the sum of the outputs of the high pass filters, a half subtractor having an output equal to half the difference between the outputs of the first and second high pass filters, a line delay for delaying the output of the half subtractor by a video line, and a subtractor for subtracting the output of the line delay from the output of the half adder.

18. A Weston Clean PAL (W-PAL) video signal system in which the luminance signal is sampled at twice the colour sub-carrier frequency 2f_{sc} and the chrominance components U, V are sampled at subcarrier frequency f_{sc} and carried as sum (U+V) and difference (U+V) signals, comprising at a transmitter;
an assembler for assembling co-phased or quadrature luminance and chrominance signals to form a PAL signal for transmission and having:
first filter means for filtering the luminance signal;
second filter means for filtering the chrominance signal; and
means for adding the outputs of the first and second filter means to form a W-PAL signal for transmission;
and at a receiver:
a splitter for splitting a received W-PAL signal to form baseband luminance and chrominance signals for storage or display and having;
third filter means for filtering the received luminance component of the W-PAL signal;
fourth filter means for filtering the received chrominance component of the W-PAL signal; and
demodulation means for demodulating the outputs of the third and fourth filter means in co-phase or quadrature;
wherein the first to fourth filter means have transfer functions F₁ to F₄ defined by$\text{F₁ = (L₂ + L₁)/2 + (L₂ - L₁) z⁻¹/2}$$\text{F₂ = -(H₁ - H₂)/2 + (H₁ + H₂) z⁻¹/2}$$\text{F₃ = (L₂ - L₁)/2 + (L₂ + L₁) z⁻¹/2}$$\text{F₄ = (H¹ + H₂)/2 - (H₁ - H₂) z⁻¹/2}$ and wherein$\text{H₁ (f) = L₂ (2fsc - f)}$ and$\text{H₂ (f) = L₁ (2fsc - f)}$ where L₁, L₂, are transfer functions of first and second low pass filters, H₁, H₂ are transfer functions of high pass filters and z⁻¹ is the transfer function of a video line delay.

## Patentansprüche

1. System zum Senden und Empfangen eines Weston-Clean-PAL (W-PAL)-Videosignals, in welchem das Luminanzsignal Y auf dem Zweifachen der Farbhilfsträgerfrequenz 2fSC abgetastet ist und die Chrominanzkomponenten U, V auf der Hilfsträgerfrequenz abgetastet sind und als Summen (U+V)- und Differenz (U-V)-Signale auf alternierenden Videozeilen übertragen werden, aufweisend an einem Sender:
einen Assembler zum Zusammensetzen von gleichgephasten oder Quadratur-2fSC Luminanzsignalen und fSC Chrominanzsignalen und aufweisend:
eine erste Filtereinrichtung (F₁) zum Filtern des Luminanzsignals; und
eine zweite Filtereinrichtung (F₂) zum Filtern des Chrominanzsignals;
und an einem Empfänger:
eine dritte Filtereinrichtung (F₃) zum Filtern des empfangenen Luminanzsignals; und
eine vierte Filtereinrichtung (F₄) zum Filtern des empfangenen Chrominanzsignals;
worin:
die vierte Filtereinrichtung (F₄) ein verschobener Spiegel der ersten Filtereinrichtung (F₁) ist, die dritte Filtereinrichtung (F₃) ein verschobener Spiegel der zweiten Filtereinrichtung (F₂) und das Produkt F₁ F₃ der ersten und dritten Filtereinrichtung und das Produkt F₂ F₄ der zweiten und vierten Filtereinrichtung Nyquist-Filter Ny, Nc sind.

2. System nach Anspruch 1, in welchem die Phase der vierten Filtereinrichtung der Gegenspiegel der Phase der ersten Filtereinrichtung ist.

3. System nach Anspruch 1 oder 2, in welchem die Phase der dritten Filtereinrichtung der Gegenspiegel der Phase der zweiten Filtereinrichtung ist.

4. Assembler für ein System zum Senden und Empfangen eines Weston-Clean-PAL (W-PAL)-Videosignals gemäß Anspruch 1, aufweisend:
eine erste Filtereinrichtung zum Filtern des Luminanzsignals, das auf dem Zweifachen der Hilfsträgerfrequenz abgetastet ist;
eine zweite Filtereinrichtung zum Filtern des Summen- und Differenzchrominanzsignals, die auf der Hilfsträgerfrequenz abgetastet eind; und
eine Einrichtung zur Addition der gefilterten Luminanz und Chrominanzsignale zur Übertragung in einem PAL-Kanal, der ein Tiefpaß-Link-Filter aufweist;
wobei die erste und zweite Filtereinrichtung in Verbindung mit der dritten und vierten Filtereinrichtung im Trenner derart ausgewählt sind, daß
die Amplituden der vierten und dritten Filtereinrichtung verschobene Spiegel der Amplituden der ersten bzw. zweiten Filtereinrichtung sind und die Produkte der ersten und dritten Filtereinrichtung und der zweiten und vierten Filtereinrichtung Nyquist-Filter Ny, Nc sind.

5. Trenner für ein System zum Senden und Empfangen eines Weston-Clean-PAL (W-PAL) Videosignals gemäß Anspruch 1, aufweisend:
eine dritte Filtereinrichtung zum Filtern eines empfangenen W-PAL-Videosignals zur Bildung eines Luminanzsignals zur Darstellung oder Aufzeichnung;
eine vierte Filtereinrichtung zum Filtern eines empfangenen W-PAL-Videosignals zur Bildung eines Chrominanzsignals zur Darstellung oder Aufzeichnung; und
eine Einrichtung zum Demodulieren des empfangenen Signals;
worin die Luminanz- und Chrominanzkomponenten vor der Übertragung durch die erste bzw. zweite Filtereinrichtung in dem Assembler gefiltert werden und
die Amplitude der vierten und dritten Filtereinrichtung verschobene Spiegel der ersten bzw. zweiten Filtereinrichtung sind; und
das Produkt der ersten und dritten Filtereinrichtung und der zweiten und vierten Filtereinrichtung Nyquist-Filter Ny, Nc sind.

6. Trenner nach Anspruch 5, in welchem die Phase der vierten und dritten Filtereinrichtung der Gegenspiegel der Phase der ersten bzw. zweiten Filtereinrichtung ist.

7. Vorrichtung zum Erzeugen eines Weston-Clean-PAL (W-PAL)-Videosignals zur Übertragung, in welchem das Luminanzsignal Y auf dem Zweifachen der Farbhilfsträgerfrequenz 2fSC abgetastet ist und die Chrominanzkomponenten U, V auf der Hilfsträgerfrequenz fSC abgetastet sind und als Summen (U+V)- und Differenz (U-V)-Signale auf alternierenden Videozeilen übertragen werden, aufweisend:
einen Assembler zur Zusammensetzung gleichgephaster oder von Quadratur-2fSC-buminanzsignalen und fSC-Chrominanzsignalen zur Bildung eines PAL-Übertragungssignals, und aufweisend :
eine erste Filtereinrichtung zum Filtern des Luminanzsignals;
eine zweite Filtereinrichtung zum Filtern des Chrominanzsignals; und
eine Einrichtung zur Addition der gefilterten Luminanz- und Chrominanzsignale zur Bildung eines PAL-Videosignals; worin
die erste Filtereinrichtung eine Übertragungsfunktion F₁ = (L₂ + L₁)/2 + (L₂ - L₁) Z⁻¹/2 aufweist und die zweite Filtereinrichtung eine Übertragungsfunktion F₂ = -(H₁ - H₂)/2 + (H₁ + H₂) Z⁻¹/2 aufweist,
wobei L₁, L₂ Übertragungsfunktionen vom ersten und zweiten Tiefpaßfilter sind und H₁, H₂ Übertragungsfunktionen vom ersten und zweiten Hochpaßfilter sind; Z⁻¹ die Übertragungsfunktion einer Videozeilenverzögerung ist und worin$\text{H₁ (f) = L₂(2fSC - f)}$ und$\text{H₂ (f) = L₁(2fSC - f).}$

8. Assembler für ein Weston-Clean-PAL (W-PAL)-Videosignal, aufweisend:
eine erste Filtereinrichtung zum Filtern des Luminanzsignals, das auf dem Zweifachen der Hilfsträgerfrequenz abgetastet ist;
eine zweite Filtereinrichtung zum Filtern der Summen (U+V)- und Differenz (U-V)-Chrominanzsignale, die auf der Hilfsträgerfrequenz fSC abgetastet sind; und
eine Einrichtung zur Addition der gefilterten Luminanz- und Chrominanzsignale zur Übertragung in einem PAL-Kanal; worin die erste Filtereinrichtung (F₁) eine Übertragungsfunktion F₁ = (L₂ + L₁)/2 +(L₂ - L₁) Z⁻¹/2 und die zweite Filtereinrichtung eine Übertragungsfunktion$\text{F₂ = -(H₁ - H₂)/2 + (H₁ + H₂) Z⁻¹/2}$ aufweisen,
wobei L₁, L₂ Übertragungsfunktionen vom ersten und zweiten Tiefpaßfilter sind; H₁, H₂ Übertragungsfunktionen vom ersten und zweiten Hochpaßfilter sind, Z⁻¹ die Übertragungsfunktion einer Videozeilenverzögerung ist und wobei$\text{H₁ (f) = L₂ (2fSC - f)}$ und$\text{H₂ (f) = L₁ (2fSC - f).}$

9. Vorrichtung nach Anspruch 7 oder 8, in welcher die erste Filtereinrichtung ein erstes und zweites Tiefpaßfilter umfaßt, die dazu ausgelegt sind, das 2fSC Luminanzsignal zu filtern, ferner einen Halb-Addierer zur Bildung eines Ausgangssignals, das der Hälfte der Summe des Ausgangssignals vom ersten und zweiten Tiefpaßfilter entspricht, einen Halb-Subtrahierer, der ein Ausgangssignal bildet, das der Hälfte der Differenz zwischen dem zweiten und ersten Filterausgangssignal entspricht, eine Zeilenverzögerung, die das Ausgangssignal des Halb-Subtrahierers so verarbeitet, daß sie es um eine Videozeile verzögert, und einen zweiten Addierer zur Addition der Ausgangssignale des Halb-Addierers und der Zeilenverzögerung zur Bildung des Luminanzeingangssignals in die Addiereinrichtung des Assemblers.

10. Vorrichtung nach Anspruch 3, in welcher die zweite Filtereinrichtung ein erstes und zweites Hochpaßfilter aufweist, die dazu ausgelegt sind, das fSC Chrominanzsignal zu filtern, ferner einen Halb-Addierer zur Bildung eines Ausgangsignals, das der Hälfte der Summe der Eingangssignale, die durch das erste und zweite Paßfilter gefiltert wurden, entspricht, einen Halb-Subtrahierer zur Bildung eines Ausgangssignals, das der Hälfte der Differenz zwischen den Ausgangssignalen des ersten und zweiten Hochpaßfilters entspricht, eine Zeilenverzögerung zur Verzögerung des Ausgangssignals des Halb-Addierers um eine Videozeile und einen Subtrahierer zur Subtraktion des Ausgangssignals vom Halb-Subtrahierer vom Ausgangssignal von der Zeilenverzögerung.

11. Vorrichtung nach Anspruch 7 oder 8, in welcher die erste und zweite Filtereinrichtung kombiniert sind und einen Tiefpaßfilterabschnitt aufweisen, der ein erstes und zweites Tiefpaßfilter umfaßt, die jeweils dazu ausgelegt sind, das 2 fSC Luminanzsignal zu filtern, ferner einen Halb-Addierer und einen Halb-Subtrahierer, die jeweils Ausgangssignale gleich der Hälfte der Summe bzw. gleich der Hälfte der Differenz der Ausgangssignale des zweiten und ersten Tiefpaßfilters ausgeben;
einen Hochpaßfilterabschnitt, der ein erstes und zweites Hochpaßfilter umfaßt, die jeweils dazu ausgelegt sind, das fSC Chrominanzsignal zu filtern, ferner einen Halb-Addierer und einen Halb-Subtrahierer, die jeweils Ausgangssignale gleich der Hälfte der Summe bzw. gleich der Hälfte der Differenz der Ausgangssignale des ersten und zweiten Hochpaßfilters bilden;
eine Subtraktionseinrichtung zum Subtrahieren des Ausgangssignals des Halb-Subtrahierers des Hochpaßfilterabschnitts vom Ausgangssignal des Halb-Addierers des Tießpaßfilterabschnitts zur Bildung eines ersten Eingangssignals für die Addiereinrichtung des Assemblers, einen weiteren Addierer zur Addition der Ausgangssignale des Halb-Subtrahierers des Tiefpaßfilterabschnitts und des Halb-Addierers des Hochpaßfilterabschnitts und eine Zeilenverzögerung zur Verzögerung des Ausgangssignals des weiteren Addierers um eine Videozeile zur Bildung des zweiten Eingangssignals für die Addiereinrichtung des Assemblers.

12. Vorrichtung nach Anspruch 9, in welcher das zweite Tiefpaßfilter eine Grenzfrequenz aufweist, die bei fSC mit einer Luminanzsignalamplitude gleich Eins beginnt und bei 5,5 MHz mit einer Luminanzsignalamplitude gleich Null aufhört, und in welcher das erste Tiefpaßfilter eine Grenzfrequenz aufweist, die bei 2,4 MHz mit einer Luminanzsignalamplitude gleich Eins beginnt und bei 3,5 MHz mit einer Amplitude gleich Null aufhört.

13. Vorrichtung nach Anspruch 9, in welcher das zweite Tiefpaßfilter eine Grenzfrequenz aufweist, die bei fSC mit einer Luminanzsignalamplitude gleich Eins beginnt und bei 5 MHz mit einer Luminanzsignalamplitude gleich Null aufhört, und in welcher das erste Tiefpaßfilter eine Grenzfrequenz aufweist, die bei 4 MHz mit einer Amplitude gleich Eins beginnt und bei 4,6 MHz mit einer Amplitude gleich Null aufhört.

14. Vorrichtung zum Empfangen eines Weston-Clean-PAL (W-PAL)-Videosignals zur Speicherung oder Darstellung, wobei das Signal durch eine Vorrichtung gemäß Anspruch 7 erzeugt wird, wobei die Vorrichtung zum Empfangen einen Trenner zum Trennen des empfangenen W-PAL-Signals zur Bildung von Basisband-Luminanz- und Chrominanzsignalen aufweist, wobei der Trenner umfaßt :
eine dritte Filtereinrichtung zum Filtern der empfangenen Luminanzkomponente;
eine vierte Filtereinrichtung zum Filtern der empfangenen Chrominanzkomponente; und
gleichgephaste oder Quadratur-Demodulationseinrichtungen zum Demodulieren der Ausgangssignale der dritten und vierten Filtereinrichtung zur Erzeugung von Basisband-Luminanz- und Chrominanzsignalen; worin
die dritte Filtereinrichtung eine Übertragungsfunktion$\text{F₃ = (L₂ - L₁)/2 + (L₂ + L₁) Z⁻¹/2,}$ die vierte Filtereinrichtung eine Übertragungsfunktion$\text{F₄ = (H₁ + H₂)/2 - (H₁ - H₂) Z⁻¹/2}$ aufweist,
wobei L₁, L₂, H₁, H₂ die Übertragungsfunktionen des ersten und zweiten Tiefpaßfilters bzw. des ersten und zweiten Hochpaßfilters sind und Z⁻¹ die Übertragungsfunktion einer Videozeilenverzögerung ist, und wobei$\text{F₃ (f) = -F₂* (2fSC - f)}$ und$\text{F₄ (f) = F₁* (2fSC -f),}$ wobei F₁, F₂, H₁, H₂, L₁, L₂ und Z⁻¹ gemäß Anspruch 7 definiert sind.

15. Trenner für ein Weston-Clean-PAL Videosignal (W-PAL), aufweisend:
eine dritte Filtereinrichtung zum Filtern der Luminanzkomponente eines W-PAL-Signals;
eine vierte Filtereinrichtung zum Filtern der Chrominanzkomponente des W-PAL-Signals; und
gleichgephaste oder Quadratur-Demodulationseinrichtungen zum Bilden von Basisband-Luminanz- und Chrominanzsignalen; worin
die dritte Filtereinrichtung eine Übertragungsfunktion$\text{F₃ = (L₂ - L₁)/2 + (L₂ + L₁) Z⁻¹/2}$ und die vierte Filtereinrichtung eine Übertragungsfunktion$\text{F₄ = (H₁ + H₂)/2 - (H₁ - H₂) Z⁻¹/2}$ aufweisen, und$\text{F₃ (f) = -F₂* (2fSC - f)}$ und$\text{F₄ (f) = F₁* (2fSC - f),}$ wobei F₁, F₂, H₁, H₂, L₁, L₂, und Z⁻¹ gemäß Anspruch 8 definiert sind.

16. Vorrichtung nach Anspruch 14 oder 15, in welcher die dritte Filtereinrichtung ein erstes und zweites Tiefpaßfilter zum Filtern des empfangenen W-PAL-Luminanzsignals, einen Halb-Addierer mit einem Ausgangssignal gleich der Hälfte der Summe der Ausgangssignale des ersten und zweiten Tiefpaßfilters, einen Zeilenverzögerer zum Verzögern des Ausgangssignals des Halb-Addierers um eine Videozeile, einen HalbSubtrahierer zum Erzeugen eines Ausgangssignals gleich der Hälfte der Differenz zwischen dem zweiten und ersten Tiefpaßfilter und einen Addierer aufweist, der die Ausgangssignale des Zeilenverzögerers und des Halb-Subtrahierers addiert.

17. Vorrichtung nach Anspruch 14 oder 15, in welcher die vierte Filtereinrichtung ein erstes und zweites Hochpaßfilter zum Filtern des empfangenen W-PAL-Chrominanzsignals aufweist, ferner einen Halb-Addierer mit einem Ausgangssignal gleich der Hälfte der Summe der Ausgangssignale der Hochpaßfilter, einen Halb-Subtrahierer mit einem Ausgangssignal gleich der Hälfte der Differenz zwischen den Ausgangssignalen des ersten und zweiten Hochpaßfilters, einen Zeilenverzögerer zum Verzögern des Ausgangssignals vom Halb-Subtrahierer um eine Videozeile und einen Subtrahierer aufweist, der das Ausgangssignal des Zeilenverzögerers vom Ausgangssignal des Halb-Addierers subtrahiert.

18. Weston-Clean-PAL (W-PAL)-Videosignalsystem, in welchem das Luminanzsignal auf dem Zweifachen der Farbhilfsträgerfrequenz 2fSC abgetastet ist und die Chrominanzkomponenten U, V auf der Hilfsträgerfrequenz fSC abgetastet sind und als Summen (U+V) und Differenz (U-V)-Signale übertragen werden, aufweisend an einem Sender:
einen Assembler zum Zusammensetzen gleichgephaster oder Quadratur-Luminanz- und Chrominanzsignale zur Bildung eines PAL-Übertragungssignals und aufweisend:
eine erste Filtereinrichtung zum Filtern des Luminanzsignals;
eine zweite Filtereinrichtung zum Filtern des Chrominanzsignals; und
eine Einrichtung zum Addieren der Ausgangssignale der ersten und zweiten Filtereinrichtung zur Bildung eines W-PAL-Signals für die Übertragung; und
an einem Empfänger:
einen Trenner zum Trennen eines empfangenen W-PAL-Signals zur Bildung von Basisband-Luminanz- und Chrominanzsignalen für die Speicherung oder Darstellung und aufweisend:
eine dritte Filtereinrichtung zum Filtern der empfangenen Luminanzkomponente des W-PAL-Signals;
eine vierte Filtereinrichtung zum Filtern der empfangenen Chrominanzkomponente des W-PAL-Signals; und
eine Demodulationseinrichtung zum Demodulieren der Ausgangssignale der dritten und vierten Filtereinrichtung in Ko-Phase oder Quadratur;
worin die erste bis vierte Filtereinrichtung Übertragungsfunktionen F₁ bis F₄ aufweisen, die definiert sind durch$\text{F₁ = (L₂ + L₁)/2 + (L₂ - L₁) Z⁻¹/2}$$\text{F₂ = -(H₁ - H₂)/2 + (H₁ + H₂) Z⁻¹/2}$$\text{F₃ = (L₂ - L₁)/2 + (L₂ + L₁) Z⁻¹/2}$$\text{F₄ = (H₁ + H₂)/2 - (H₁ - H₂) Z⁻¹/2}$ und wobei$\text{H₁ (f) = L₂ (2fSC - f)}$ und$\text{H₂ (f) = L₁ (2fSC - f),}$ wobei L₁, L₂ Übertragungsfunktionen des ersten und zweiten Tiefpaßfilters sind, H₁, H₂ Übertragungsfunktionen der Hochpaßfilter sind und Z⁻¹ die Übertragungsfunktion einer Videozeilenverzögerung ist.

## Revendications

1. Système pour transmettre et recevoir un signal vidéo PAL du type Weston Clean (W-PAL), où le signal de luminance Y est échantillonné à deux fois la fréquence de la sous-porteuse de couleur 2f_{sc}, et les composantes de chrominance U, V sont échantillonnées à la fréquence de la sous-porteuse et transmises en tant que signaux de somme (U+V) et de différence (U-V) sur des lignes vidéo alternatives, comprenant, au niveau d'un transmetteur :
un assembleur pour assembler des signaux de luminance 2fsc et des signaux de chrominance fsc en concordance de phase ou en quadrature, et ayant :
des premiers moyens de filtre (F1) pour filtrer le signal de luminance; et
des deuxièmes moyens de filtre (F2) pour filtrer le signal de chrominance;
et au niveau d'un récepteur
des troisièmes moyens de filtre (F3) pour filtrer le signal de luminance reçu; et
des quatrièmes moyens de filtre (F4) pour filtrer le signal de chrominance reçu;
dans lequel :
les quatrièmes moyens de filtre (F4) sont une réflexion décalée des premiers moyens de filtre (F1), les troisièmes moyens de filtre (F3) sont une réflexion décalée des deuxièmes moyens de filtre (F2), et le produit F1 F3 des premiers et troisièmes moyens de filtre, et le produit F2 F4 des deuxièmes et quatrièmes moyens de filtre sont des filtres Nyquist Ny, Nc.

2. Système selon la revendication 1, dans lequel la phase des quatrièmes moyens de filtre est la réflexion inversée de la phase des premiers moyens de filtre.

3. Système selon la revendication 1 ou 2, dans lequel la phase des troisièmes moyens de filtre est la réflexion inversée de la phase des deuxièmes moyens de filtre.

4. Assembleur pour un système de transmission et de réception d'un signal vidéo PAL du type Weston Clean (W-PAL), selon la revendication 1, comprenant :
des premiers moyens de filtre pour filtrer le signal de luminance échantillonné à deux fois la fréquence de la sous-porteuse;
des deuxièmes moyens de filtre pour filtrer le signal de chrominance de somme et de différence échantillonné à la fréquence de la sous-porteuse; et
des moyens pour additionner les signaux de luminance et de chrominance filtrés à transmettre par un canal PAL ayant un filtre de liaison passe-bas;
les premiers et deuxièmes moyens de filtre étant choisis en conjonction avec les troisièmes et quatrièmes moyens de filtre dans le diviseur de sorte que
les amplitudes des quatrièmes et troisièmes moyens de filtre sont des réflexions décalées des amplitudes des premiers et deuxièmes moyens de filtre respectivement, et le produit des premiers et troisièmes moyens de filtre et des deuxièmes et quatrièmes moyens de filtre sont des filtres Nyquist Ny, Nc.

5. Dispositif de division pour un système de transmission et réception d'un signal vidéo PAL du type Weston Clean (W-PAL), selon la revendication 1, comprenant
des troisièmes moyens de filtre pour filtrer un signal vidéo W-PAL reçu, afin de créer un signal de luminance pour affichage ou enregistrement;
des quatrièmes moyens de filtre pour filtrer un signal vidéo W-PAL, reçu afin de créer un signal de chrominance pour affichage ou enregistrement; et
des moyens pour démoduler le signal reçu;
dans lequel les composantes de luminance et de chrominance sont filtrées avant d'être transmises par les premiers et deuxièmes moyens de filtre dans l'assembleur, respectivement, et
les amplitudes des quatrièmes et troisièmes moyens de filtre sont des réflexions décalées des premiers et deuxièmes moyens de filtre, respectivement, et
le produit des premiers et troisièmes moyens de filtre et des deuxièmes et quatrièmes moyens de filtre sont des filtres Nyquist Ny, Nc.

6. Dispositif de division selon la revendication 5, dans lequel la phase des quatrièmes et troisièmes moyens de filtre est une réflexion inversée de la phase des premiers et deuxièmes moyens de filtre, respectivement.

7. Appareil pour générer un signal vidéo PAL du type Weston Clean (W-PAL) à transmettre, où le signal de luminance Y est échantillonné à deux fois la fréquence de la sous-porteuse de couleur 2_{fsc}, et les composantes de chrominance U, V sont échantillonnées à la fréquence de sous-porteuse f_{sc} et transmises en tant que signaux de somme (U+V) et de différence (U-V) sur des lignes vidéo alternatives, comprenant :
un assembleur pour assembler des signaux de luminance 2fsc et des signaux de chrominance fsc en concordance de phase ou en quadrature pour former un signal PAL à transmettre, et ayant;
des premiers moyens de filtre pour filtrer le signal de luminance;
des deuxièmes moyens de filtre pour filtrer le signal de chrominance; et
des moyens pour additionner les signaux de luminance et de chrominance filtrés afin de créer un signal vidéo PAL; où
les premiers moyens de filtre ont une fonction de transfert F1=(L2+L1)/2+(L2-L1)z⁻¹/2, et les deuxièmes moyens de filtre ont une fonction de transfert F2=-(H1-H2)/2+(H1+H2)z⁻¹/2.
Où L1, L2 sont des fonctions de transfert des premier et deuxième filtres passe-bas, et H1, H2 sont des fonctions de transfert des premier et deuxième filtres passe-haut; Z⁻¹ est la fonction de transfert d'un retard de ligne vidéo, et où$\text{H1(f)=L2(2fsc-f)}$ et$\text{H2(f)=L1(2fsc-f)}$

8. Assembleur pour un signal vidéo PAL du type Weston Clean (W-PAL) comprenant :
des premiers moyens de filtre pour filtrer le signal de luminance échantillonné à deux fois la fréquence de la sous-porteuse;
des deuxièmes moyens de filtre pour filtrer les signaux de chrominance de somme (U+V) et de différence (U-V) échantillonnés à la fréquence de la sous-porteuse; f_{sc} et
des moyens pour additionner les signaux de luminance et de chrominance filtrés dans un canal PAL; où les premiers moyens de filtre (F₁) ont une fonction de transfert F₁=(L₂+L₁)/2+(L₂-L₁)z⁻¹/2 et les deuxièmes moyens de filtre ont une fonction de transfert F₂=-(H₁-H₂)/2+(H₁+H₂)z⁻¹/2
où L₁, L₂ sont des fonctions de transfert des premier et deuxième filtres passe-bas; H₁, H₂ sont des fonctions de transfert des premier et deuxième filtres passe-haut, z⁻¹ est la fonction de transfert d'un retard de ligne vidéo, et où$\text{H₁(f)=L₂(2fsc-f)}$ et$\text{H₂(f)=L₁(2fsc-f)}$

9. Appareil selon la revendication 7 ou 8, dont les premiers moyens de filtre comprennent des premier et deuxième filtres passe-bas agencés de façon à filtrer le signal de luminance 2fsc, un demi-additionneur pour créer un signal de sortie égal à la moitié de la somme de la sortie des premier et deuxième filtres passe-bas, un demi-soustracteur pour créer un signal de sortie égal à la moitié de la différence entre les sorties des deuxième et premier filtres, un retard de ligne pour agir sur la sortie du demi-soustracteur afin de le retarder par une ligne vidéo, et un deuxième additionneur pour additionner les sorties du demi-additionneur et du retard de ligne pour créer l'entrée de luminance auxdits moyens d'addition de l'assembleur.

10. Appareil selon la revendication 3, dont les deuxièmes moyens de filtre comprennent des premier et deuxième filtres passe-haut, agencés de façon à filtrer le signal de chrominance fsc, un demi-additionneur pour créer un signal de sortie égal à la moitié de la somme des signaux d'entrée filtrés par les premier et deuxième filtres passe-bas, un demi-soustracteur pour créer un signal de sortie égal à la moitié de la différence entre les sorties des premier et deuxième filtres passe-haut, un retard de ligne pour retarder la sortie du demi-additionneur par une ligne vidéo, et un soustracteur pour soustraire la sortie du demi-soustracteur de la sortie du retard de ligne.

11. Appareil selon la revendication 7 ou 8, dont les premiers et deuxièmes moyens de filtre sont combinés et comprennent une section de filtre passe-bas ayant des premier et deuxième filtres passe-bas, chacun agencé de façon à filtrer le signal de luminance 2fsc, un demi-additionneur et un demi-soustracteur formant, respectivement, des signaux de sortie égaux à la moitié de la somme et à la moitié de la différence des sorties des premier et deuxième filtres passe-bas;
une section de filtre passe-haut ayant des premier et deuxième filtres passe-haut, chacun agencé de façon à filtrer le signal de chrominance fsc, un demi-additionneur et un demi-soustracteur formant, respectivement, des signaux de sortie égaux à la moitié de la somme et la moitié de la différence des sorties des premier et deuxième filtres passe-haut;
des moyens de soustraction pour soustraire la sortie du demi-soustracteur de la section de filtre passe-haut de la sortie du demi-additionneur de la section de filtre passe-bas, afin de créer une première entrée aux moyens d'addition de l'assembleur, un additionneur supplémentaire pour additionner les sorties du demi-soustracteur de la section de filtre passe-bas et du demi-additionneur de la section de filtre passe-haut, et un retard de ligne pour retarder la sortie de l'additionneur supplémentaire par une ligne vidéo afin de créer une deuxième entrée aux moyens d'addition de l'assembleur.

12. Appareil selon la revendication 9, dont le deuxième filtre passe-bas a une fréquence de coupure commençant à fsc pour une amplitude de signal de luminance égale à une unité, et s'arrêtant à 5,5 Mhz pour une amplitude de signal de luminance égale à zéro, et le premier filtre passe-bas a une fréquence de coupure commençant à 2,4 Mhz pour une amplitude de signal de luminance égale à une unité, et s'arrêtant à 3,5 Mhz pour une amplitude égale à zéro.

13. Appareil selon la revendication 9, dont le deuxième filtre passe-bas a une fréquence de coupure commençant à fsc pour une amplitude de signal de luminance égale à une unité, et s'arrêtant à 5 Mhz pour une amplitude de signal de luminance égale à zéro, et le premier filtre passe-bas a une fréquence de coupure commençant à 4 Mhz pour une amplitude égale à une unité et s'arrêtant à 4,6 Mhz pour une amplitude égale à zéro.

14. Appareil pour recevoir un signal vidéo PAL du type Weston Clean (W-PAL) pour stockage ou affichage, ledit signal étant généré par un appareil selon la revendication 7, l'appareil de réception comprenant un dispositif de division pour diviser le signal W-PAL, reçu afin de créer des signaux de luminance chrominance en bande de base, le dispositif de division comprenant;
des troisièmes moyens de filtre pour filtrer la composante de luminance reçue;
des quatrièmes moyens de filtre pour filtrer la composante de chrominance reçue; et
des moyens de démodulation en concordance de phase ou en quadrature pour démoduler les sorties des troisièmes et quatrièmes moyens de filtre afin de produire des signaux de luminance chrominance en bande de base; où
les troisièmes moyens de filtre ont une fonction de transfert$\text{F₃=(L₂-L₁)/2+(L₂+L₁)z⁻¹/2}$ les quatrièmes moyens de filtre ont une fonction de transfert$\text{F₄=(H₁+H₂)/2-(H₁-H₂)z⁻¹/2}$ où L1, L2, H1, H2 sont des fonctions de transfert des premier et deuxième filtres passe-bas et des premier et deuxième filtres passe-haut respectivement, et z⁻¹ est la fonction de transfert d'un retard de ligne vidéo, où${\text{F₃(f)=-F₂*(2f}}_{\text{sc}} \text{-f)}$ et${\text{F₄(f)=F₁*(2f}}_{\text{sc}} \text{-f)}$ où F₁, F₂, H₁, H₂, L₁, L₂ et Z⁻¹ sont tels que définis par la revendication 7.

15. Dispositif de division pour un signal vidéo PAL du type Weston Clean (W-PAL), comprenant :
des troisièmes moyens de filtre pour filtrer la composante de luminance d'un signal W-PAL;
des quatrièmes moyens de filtre pour filtrer la composante de chrominance d'un signal W-PAL; et
des moyens de démodulation en concordance de phase ou en quadrature pour créer des signaux de luminance et chrominance en bande de base; où
les troisièmes moyens de filtre ont une fonction de transfert$\text{F₃=(L₂-L₁)/2+(L₂+L₁)z⁻¹/2}$ et les quatrièmes moyens de filtre ont une fonction de transfert$\text{F₄=(H₁+H₂)/2-(H₁-H₂)z⁻¹/2}$ et${\text{F₃(f)=-F₂*(2f}}_{\text{sc}} \text{-f)}$ et${\text{F₄(f)=F₁*(2f}}_{\text{sc}} \text{-f)}$ où F₁, F₂, H₁, H₂, L₁, L₂ et z⁻¹ sont tels que définis par la revendication 8.

16. Appareil selon la revendication 14 ou 15, dont les troisièmes moyens de filtre comprennent des premier et deuxième filtres passe-bas pour filtrer le signal de luminance W-PAL reçu, un demi-additionneur ayant une sortie égale à la moitié de la somme des sorties des premier et deuxième filtres passe-bas, un retard de ligne pour retarder la sortie du demi-additionneur par une ligne vidéo, un demi-soustracteur pour produire une sortie égale à la moitié de la différence entre les deuxième et premier filtres passe-bas, et un additionneur pour additionner les sorties du retard de ligne et du demi-soustracteur.

17. Appareil selon la revendication 14 ou 15, dont les quatrièmes moyens de filtre comprennent des premier et deuxième filtres passe-haut pour filtrer le signal de chrominance W-PAL reçu, un demi-additionneur ayant une sortie égale à la moitié de la somme des sorties des filtres passe-haut, un demi-soustracteur ayant une sortie égale à la moitié de la différence entre les sorties des premier et deuxième filtres passe-haut, un retard de ligne pour retarder la sortie du demi-soustracteur par une ligne vidéo, et un soustracteur pour soustraire la sortie du retard de ligne de la sortie du demi-additionneur.

18. Système de signal vidéo PAL du type Weston Clean (W-PAL) dans lequel le signal de luminance est échantillonné à deux fois la fréquence de la sous-porteuse de couleur 2f_{sc}, et les composantes de chrominance U, V sont échantillonnées à la fréquence f_{sc} de la sous-porteuse et transportées en tant que signaux de somme (U+V) et de différence (U-V), comprenant au niveau d'un transmetteur;
un assembleur pour assembler des signaux de luminance et de chrominance en concordance de phase ou en quadrature pour former un signal PAL à transmettre, et ayant;
des premiers moyens de filtre pour filtrer le signal de luminance;
des deuxièmes moyens de filtre pour filtrer le signal de chrominance; et
des moyens pour additionner les sorties des premiers et deuxièmes moyens de filtre pour créer un signal W-PAL à transmettre;
et au niveau d'un récepteur :
un dispositif de division pour diviser un signal W-PAL reçu pour créer des signaux de luminance et de chrominance en bande de base à stocker ou à afficher, et ayant;
des troisièmes moyens de filtre pour filtrer la composante de luminance reçue du signal W-Pal;
des quatrièmes moyens de filtre pour filtrer la composante de chrominance reçue du signal W-Pal; et
des moyens de démodulation pour démoduler les sorties des troisièmes et quatrièmes moyens de filtre en concordance de phase ou en quadrature;
où les premiers et quatrièmes moyens de filtre ont des fonctions de transfert F1 à F4 définies par$\text{F1=(L2+L1)/2+(L2-L1)z⁻¹/2}$$\text{F2=-(H1-H2)/2+(H1+H2)z⁻¹/2}$$\text{F3=(L2-L1)/2+(L2+L1)z⁻¹/2}$$\text{F4=(H1+H2)/2-(H1-H2)z⁻¹/2}$ et où$\text{H1(f)=L2(2fsc-f)}$ et$\text{H2(f)=L1(2fsc-f)}$ où L1, L2 sont des fonctions de transfert des premier et deuxième filtres passe-bas, H1, H2 sont des fonctions de transfert des filtres passe-haut, et z⁻¹ est la fonction de transfert du retard de ligne vidéo.
